# EUROPÄISCHE PATENTSCHRIFT

(11) **EP 2 126 858 B1**
(45) Veröffentlichungstag und Bekanntmachung des Hinweises auf die Patenterteilung: **29.05.2019**
(21) Anmeldenummer: 08716845.6
(22) Anmeldetag: 14.02.2008
(51) Int. Cl.: G07F 7/10, G06Q 20/00

(54) **CHIPKARTE UND VERFAHREN ZUR FREISCHALTUNG EINER CHIPKARTEN-FUNKTION**
CHIP CARD AND METHOD FOR RELEASING A CHIP CARD FUNCTION
CARTE À PUCE ET PROCÉDÉ DE LIBÉRATION D'UNE FONCTION DE CARTE À PUCE

(30) Priorität: 20.02.2007 DE 102007008651
(43) Veröffentlichungstag der Anmeldung: 02.12.2009
(73) Patentinhaber: Bundesdruckerei GmbH, 10958 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2008/051777
(87) Internationale Veröffentlichungsnummer: WO 2008/101851

(56) Entgegenhaltungen:
- EP-A- 0 286 094
- EP-A- 1 785 955
- DE-A1- 10 218 210
- DE-A1-102005 014 639
- US-A- 4 734 568
- US-A- 5 285 200
- US-A1- 2006 204 051

## Beschreibung

Die Erfindung betrifft eine Chipkarte, ein Computersystem, insbesondere ein Trust-Center, ein Verfahren zur Freischaltung einer Chipkarten-Funktion und ein entsprechendes Computerprogrammprodukt.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Maximalwert stehenden Fehleingabezähler (wird auch als "Fehlbedienungszähler" bezeichnet) einer PIN wieder auf Null zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1). Solche auf Transport-PIN oder Null-PIN beruhenden Verfahren werden auch als "Erstnutzungsfunktion" bezeichnet

Chipkarten mit änderbarem PIN haben zwar gegenüber Chipkarten mit einer statischen PIN den Vorteil, dass die Chipkarte unter Umständen nicht durch eine neue ersetzt werden muss, wenn der Benutzer die PIN vergessen hat, beispielsweise in dem mit Hilfe der PUK der Fehlbedienungszähler zurückgesetzt und eine neue PIN eingegeben wird. Allerdings ist eine solche Vorgehensweise für sicherheitskritische Anwendungen, insbesondere für die Vornahme von digitalen Signaturen und im Zahlungsverkehr aufgrund der eingeschränkten Sicherheit gegen Manipulationen nicht akzeptabel. Daher wird bei Anwendungen, die eine sehr hohe Sicherheit erfordern, eine Neueingabe der PIN mittel PUK in der Regel nicht erlaubt. Dies bedeutet, dass lediglich das Rücksetzen des Fehlbedienungszählers mit der PUK erlaubt ist. Der Nachteil ist hier wiederum, dass bei Vergessen der PIN die Chipkarte ersetzt werden muss.

Aus EP 0 286 094 A2 ist eine IC-Karte mit zwei PINs bekannt. Die korrekte Eingabe der ersten der beiden PINs ermöglicht das Schreiben von Daten in die IC-Karte, wohingegen die korrekte Eingabe der anderen PIN das Auslesen der Daten aus der IC-Karte in einen Computer ermöglicht.

Aus US 5,285,200 ist eine IC-Karte bekannt, deren Datenspeicher in eine Vielzahl von Datenspeicherbereichen aufgeteilt ist, wobei jedem der Speicherbereiche eine eigene ID-Nummer zugeordnet ist, die für den Zugriff auf einen solchen Speicherbereich erforderlich ist.

Aus US 4,734,568 ist eine IC-Karte bekannt, bei der die Sicherheitsstufe für verschiedene Speicherbereiche einstellbar ist. Beispielsweise können demselben Speicherbereich zwei verschiedene Schlüssel A und B zugeordnet sein. Voraussetzung für den Zugriff auf den Speicherbereich ist dann, dass entweder der Schlüssel A oder der Schlüssel B korrekt eingegeben werden.

In der EP 1 785 955 A1 ist ein Verfahren zur Freigabe des Zugriffs auf eine durch einen persönlichen Identifikationscode gesicherte Anwendung oder Einrichtung gezeigt. Der Anwendung bzw. der Einrichtung sind zwei veränderbare Codes zugeordnet. Der Zugriff auf die Anwendung oder Einrichtung ist möglich, wenn einer der Codes eingegeben wird.

Der Erfindung liegt demgegenüber die Aufgabe zugrunde, eine verbesserte Chipkarte, ein Computersystem, ein Verfahren zur Freischaltung einer Chipkarten-Funktion und ein entsprechendes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Nach einer Ausführungsform der Erfindung wird ein Verfahren zur Freischaltung einer Chipkarten-Funktion einer Chipkarte geschaffen, in der zumindest zwei geheime Kennungen, beispielsweise zwei PINs, zum Schutz derselben Chipkarten-Funktion gespeichert sind. Das Verfahren weist die folgenden Schritte auf: Eingabe einer Kennung, Prüfung der Kennung auf Übereinstimmung mit einer ersten Kennung der Chipkarte, wenn hinsichtlich der ersten Kennung eine maximale Anzahl von Fehleingaben nicht überschritten ist, und andernfalls, Prüfung der Kennung auf Übereinstimmung mit einer zweiten Kennung der Chipkarte, wenn hinsichtlich der ersten Kennung die maximale Anzahl von Fehleingaben erreicht ist und hinsichtlich der zweiten Kennung eine maximale Anzahl von Fehleingaben nicht erreicht ist, und Freischaltung der Chipkarten-Funktion, wenn die Prüfung der Kennung eine Übereinstimmung mit der ersten Kennung bzw. mit der zweiten Kennung ergeben hat.

Die Überprüfung der eingegebenen Kennung erfolgt also immer nur gegenüber der aktuell gültigen in der Chipkarte gespeicherten Kennung, d.h. gegenüber der ersten Kennung, wenn diese nicht gesperrt ist, und gegenüber der zweiten Kennung, wenn die erste Kennung gesperrt und die zweite Kennung nicht gesperrt ist.

Dem berechtigten Benutzer der Chipkarte wird von dem Herausgeber der Chipkarte zunächst nur eine der Kennungen mitgeteilt. Wenn der Benutzer diese Kennung vergisst, so kann er eine Anforderung an den Herausgeber der Chipkarte richten, um von dort die zweite auf seiner Chipkarte gespeicherte Kennung zu erhalten.

Wenn beispielsweise der Fehlbedienungszähler der ersten Kennung auf seinem Maximalwert steht, prüft die Chipkarte eine von dem Benutzer eingegebene Kennung nicht mehr gegen die erste Kennung, sondern gegen die zweite Kennung. Wenn die von dem Benutzer eingegebene Kennung mit der zweiten Kennung übereinstimmt, so wird die Chipkarten-Funktion freigeschaltet, obwohl der Fehlbedienungszähler, der der ersten Kennung zugeordnet ist, auf seinem Maximalwert steht.

Die Erfindung ist besonders vorteilhaft, da sie es ohne Sicherheitseinschränkung ermöglicht, dass eine Chipkarte auch dann weiter benutzt werden kann, wenn der Benutzer die ihm bekannte geheime Kennung vergessen hat. Dies wird dadurch ermöglicht, dass auf der Chipkarte zumindest eine zweite geheime Kennung gespeichert wird, die dem Benutzer zunächst nicht mitgeteilt wird, sondern erst auf Anforderung dann, wenn der Benutzer die erste Kennung vergessen hat.

Durch wiederholte fehlerhafte Eingabe der ersten Kennung steht nämlich deren Fehlbedienungszähler auf seinem Maximalwert, sodass die Chipkarte dann die von dem Benutzer eingegebene Kennung nicht mehr gegen die erste, sondern gegen die zweite Kennung prüft. Insbesondere für Massenanwendungen, wie zum Beispiel Bankkarten, Kreditkarten, der elektronischen Gesundheitskarte etc. hat dies den großen Vorteil, dass bereits herausgegebene Chipkarten nicht vernichtet und ersetzt werden müssen, wenn der berechtigte Benutzer die ihm zuvor mitgeteilte geheime Kennung vergessen hat.

Nach einer Ausführungsform der Erfindung ist eine Sequenz von Kennungen in dem geschützten Speicherbereich der Chipkarte gespeichert, d.h. zwei, drei, vier oder mehr Kennungen. Jeder der Kennungen sind Mittel zur Sperrung zugeordnet, d.h. beispielsweise jeweils ein Fehlbedienungszähler. Wenn eine zutreffende Kennung von einem Benutzer eingegeben wird, die nicht gesperrt ist, d.h. beispielsweise deren Fehlbedienungszähler nicht auf seinem Maximalwert steht, so wird die Chipkarten-Funktion freigeschaltet.

Nach einer Ausführungsform der Erfindung prüft die Chipkarte eine eingegebene Kennung immer gegenüber der führenden, nicht gesperrten Kennung der Sequenz zur Freischaltung der Chipkarten-Funktion. Sind also beispielsweise die geheimen Kennungen A, B, C in dem geschützten Speicherbereich der Chipkarte gespeichert, d.h. eine Sequenz A-B-C, und ist die Kennung A gesperrt, wohingegen die Kennungen B und C nicht gesperrt sind, so prüft die Chipkarte eine Eingabe des Benutzers nur gegen die auf die gesperrte Kennung folgende Kennung in der Sequenz, d.h. hier gegen die Kennung B, nicht aber auf die anderen nicht gesperrten Kennungen der Sequenz, d.h. nicht gegenüber der Kennung C. Bei der führenden, nicht gesperrte Kennung der Sequenz handelt es sich also um die aktuell gültige Kennung und nur gegen diese erfolgt die Prüfung der eingegebenen Kennung.

Dies hat den Vorteil, dass insbesondere dann, wenn eine relative große Anzahl von Kennungen in der Chipkarte gespeichert ist, eine Freischaltung der Chipkarte auch dann nicht erreicht werden kann, wenn der Benutzer zufälligerweise eine korrekte nicht gesperrte Kennung eingibt, die aber nicht die aktuell gültige Kennung ist.

Nach einer Ausführungsform der Erfindung hat die Chipkarte ein Chipkarten-Betriebssystem zum Empfang einer von dem Benutzer eingegebenen Kennung und zur Überprüfung des aktuell gültigen PIN-Objekts der Chipkarte, d.h. zum Vergleich der eingegebenen Kennung mit einer in dem geschützten Speicherbereich gespeicherten Kennung, die nicht gesperrt ist, insbesondere mit der führenden, nicht gesperrten Kennung der Sequenz.

In einem weiteren Aspekt betrifft die Erfindung eine Chipkarte, in der zumindest zwei geheime Kennungen, beispielsweise zwei PINs, zum Schutz derselben Chipkarten-Funktion gespeichert sind.

Nach einer Ausführungsform der Erfindung sind die in der Chipkarte gespeicherten Kennungen zusätzlich durch einen Aktivierungscode geschützt. Vor der erstmaligen Aktivierung der Chipkarten-Funktion mit einer der Kennungen, muss der Benutzer zusätzlich einen Aktivierungscode, der der betreffenden Kennung zugeordnet ist, eingeben. Nach korrekter Eingabe des Aktivierungscodes wird die betreffende Kennung dann zu der aktuell gültigen Kennung, gegen die das Chipkarten-Betriebssystem die Überprüfung der von einem Benutzer eingegebenen Kennung durchführt.

In einem weiteren Aspekt betrifft die Erfindung ein Computersystem für die Generierung von mehreren Kennungen für eine Chipkarte zur Freischaltung derselben Chipkarten-Funktion. Die Generierung einer geheimen Kennung, insbesondere einer PIN, kann mit Hilfe an sich aus dem Stand der Technik bekannter Algorithmen erfolgen. Beispielsweise wird ein so genannter "Seed Value" in einen Pseudo-Zufallsgenerator, wie zum Beispiel ein rückgekoppeltes Schieberegister, eingegeben, um mehrere Kennungen zur Personalisierung einer Chipkarte zu erhalten. Diese Kennungen werden in dem geschützten Speicherbereich der Chipkarte bei der Personalisierung gespeichert. Die Kennungen und/oder der Seed Value werden auch seitens des Computersystems gespeichert, um dem Benutzer zunächst eine erste dieser Kennungen mitzuteilen und aufgrund einer Benutzeranforderung - wenn der Benutzer seine geheime Kennung vergessen hat - ihm eine Ersatzkennung mitzuteilen.

In einem weiteren Aspekt betrifft die Erfindung ein Computerprogrammprodukt mit von dem Prozessor einer Chipkarte ausführbaren Programminstruktionen zur Ausführung eines solchen Verfahrens.

Im Weiteren werden Ausführungsformen der Erfindung mit Bezugnahme auf die Zeichnungen näher erläutert. Es zeigen:
- Figur 1: ein Blockdiagramm einer Ausführungsform einer erfindungsgemäßen Chipkarte,
- Figur 2: ein Flussdiagramm einer Ausführungsform eines erfindungsgemäßen Verfahrens,
- Figur 3: ein Blockdiagramm einer weiteren Ausführungsform einer erfindungsgemäßen Chipkarte und eine Ausführungsform eines erfindungsgemäßen Computersystems.

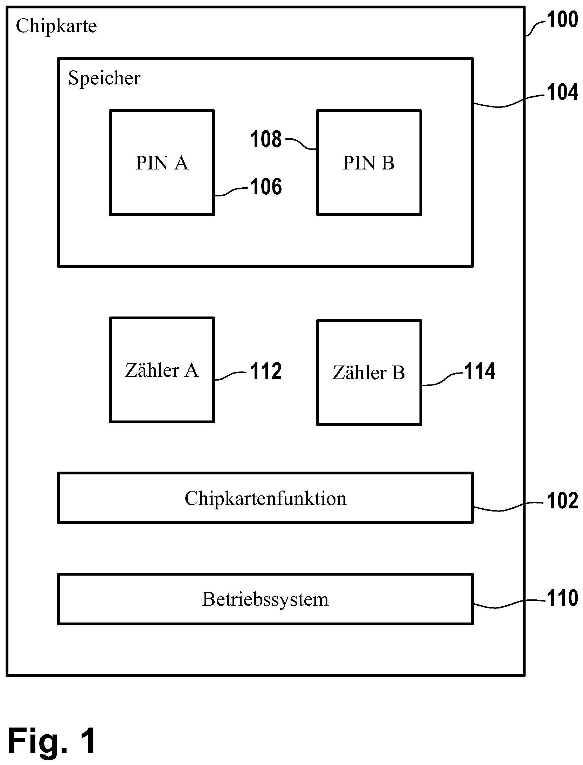

Die Figur 1 zeigt eine Chipkarte 100 mit zumindest einer Chipkarten-Funktion 102. Bei der Chipkarten-Funktion 102 kann es sich zum Beispiel um eine Funktion zur Generierung einer digitalen Signatur, eine Bezahlfunktion oder eine andere schutzbedürftige Funktion handeln. Zum Schutz der Chipkarten-Funktion 102 sind in einem geschützten Speicher 104 der Chipkarte 100 zwei geheime Kennungen 106 und 108 gespeichert, wie zum Beispiel die PIN A und die PIN B, wie in der Figur 1 gezeigt.

Für jede der geheimen Kennungen 106, 108 ist eine bestimmte maximale Anzahl von Fehleingaben definiert. Wenn diese maximale Anzahl von Fehleingaben hinsichtlich einer der geheimen Kennungen erreicht wird, so wird diese gesperrt, d.h. auch die Eingabe der korrekten Kennung führt dann nicht mehr zur Freigabe der Chipkarten-Funktion 102. Diese Funktionalität kann durch ein Betriebssystem 110 der Chipkarte 100 realisiert sein und/oder mit Hilfe von Fehlbedienungszählern 112, 114, die den geheimen Kennungen 106, 108 zugeordnet sind, in dem in der Figur 1 gezeigten Beispielsfall also die Zähler A und B.

Die Fehlbedienungszähler 112, 114 sind jeweils so ausgebildet, dass der Zählerstand mit jedem fehlgeschlagenen Eingabeversuch der dem betreffenden Fehlbedienungszähler zugeordneten Kennung der Zählerstand inkrementiert wird. Wenn der Zählerstand einen vorgegebenen Maximalwert erreicht, wird die dem Fehlbedienungszähler zugeordnete Kennung gesperrt.

Wenn es sich also beispielsweise bei der PIN A um die aktuelle PIN handelt, so wird durch Eingabe einer fehlerhaften PIN A* der Fehlbedienungszähler 112 inkrementiert; entsprechend verhält es sich für den Fehlbedienungszähler 114 mit Bezug auf die PIN B.

Wenn ein Benutzer in die Chipkarte 100 eine Kennung zur Freischaltung der Chipkarten-Funktion 102 eingibt, so wird diese von dem Betriebssystem 110 der Chipkarte 100 gegen die in dem Speicher 104 gespeicherten geheimen Kennungen 106, 108 geprüft, sofern diese nicht gesperrt sind. Wenn der Benutzer also beispielsweise eine Kennung A* eingibt, so wird diese von dem Betriebssystem 110 auf Übereinstimmung mit der PIN A geprüft, sofern der Zähler A nicht auf seinem Maximalwert von zuvor erfolgten Fehleingaben der PIN A steht. Wenn dies der Fall ist, erfolgt die Prüfung der von dem Benutzer eingegebenen Kennung gegenüber der Ersatz-PIN B, d.h. der geheimen Kennung 108, sofern deren Fehlbedienungszähler 114 nicht auf seinem Maximalwert steht.

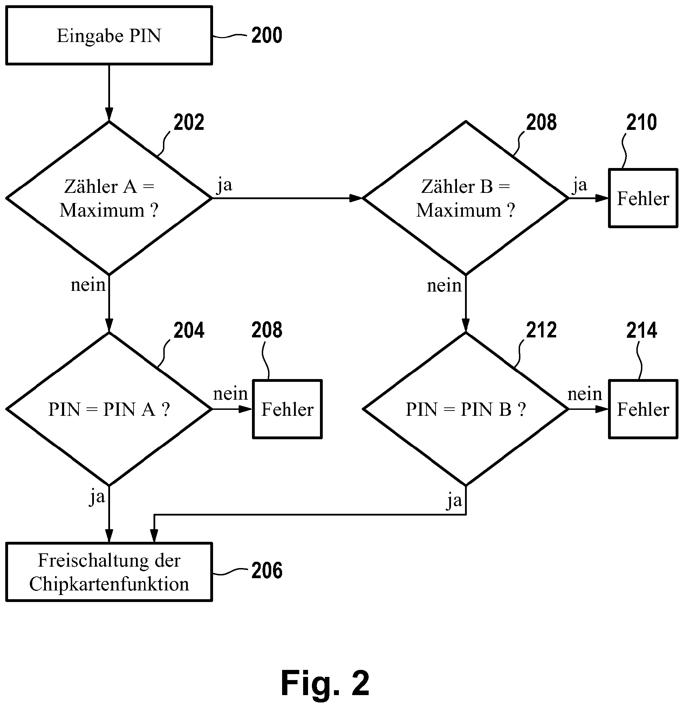

Die Figur 2 zeigt ein Flussdiagramm einer bevorzugten Arbeitsweise der Chipkarte 100 der Figur 1. In dem Schritt 200 gibt der Benutzer eine PIN ein. Dies kann beispielsweise über die Tastatur eines Computers erfolgen, an dem ein Chipkarten-Lesegerät mit der Chipkarte angeschlossen ist oder über ein Chipkarten-Terminal mit einer Tastatur, insbesondere ein so genanntes Klasse 2-Chipkarten-Terminal.

Aufgrund der Eingabe der PIN in dem Schritt 200 prüft die Chipkarte in dem Schritt 202, ob der Zähler A (vgl. der Fehlbedienungszähler 112 der Figur 1) auf seinem Maximalwert steht. Wenn dies nicht der Fall ist, bedeutet das, dass die dem Zähler A zugeordnete PIN A nicht gesperrt ist. Die Chipkarte prüft daraufhin in dem Schritt 204, ob die von dem Benutzer in dem Schritt 200 eingegebene PIN identisch mit der PIN A ist. Ist dies der Fall, so wird in dem Schritt 206 von dem Betriebssystem der Chipkarte die Chipkarten-Funktion freigeschaltet (vgl. Betriebssystem 110 und Chipkarten-Funktion 102 in der Ausführungsform der Figur 1). Wenn die Chipkarte in dem Schritt 204 feststellt, dass die von dem Benutzer eingegebene PIN nicht mit der PIN A übereinstimmt, so gibt die Chipkarte in dem Schritt 208 eine entsprechende Fehlermeldung ab.

Wenn die Chipkarte in dem Schritt 202 feststellt, dass der der PIN A zugeordnete Zähler A auf seinem Maximalwert steht, so folgt daraus, dass die PIN A gesperrt und damit ungültig ist. Die Ablaufsteuerung geht dann zu dem Schritt 208 über, um zu prüfen, ob es sich bei der PIN B um die aktuelle PIN handelt. Diese Prüfung in dem Schritt 208 erfolgt analog zu dem Schritt 202, indem der der PIN B zugeordnete Fehlbedienungszähler, d.h. der Zähler B, überprüft wird. Wenn der Zähler B ebenfalls auf seinem Maximalwert steht, so bedeutet dies, dass die PIN B ebenfalls gesperrt ist. Wenn in dem Speicher der Chipkarte keine weiteren PINs vorhanden sind, bedeutet dies, dass sämtliche der Chipkarten-Funktion zugeordnete PINs gesperrt sind und damit keine Freischaltung der Chipkarten-Funktion möglich ist. In diesem Fall wird in dem Schritt 210 eine Fehlermeldung von der Chipkarte abgegeben.

Wenn in dem Schritt 208 hingegen festgestellt wird, dass die PIN B nicht gesperrt ist, so handelt es sich also bei der PIN B um die aktuell gültige PIN, sodass in dem Schritt 212 die von dem Benutzer in dem Schritt 200 eingegebene PIN gegen die PIN B geprüft wird. Wenn die eingegebene PIN mit der PIN B übereinstimmt, so schaltet das Betriebssystem in dem Schritt 206 die Chipkarten-Funktion frei; im gegenteiligen Fall wird in dem Schritt 214 eine Fehlermeldung abgegeben.

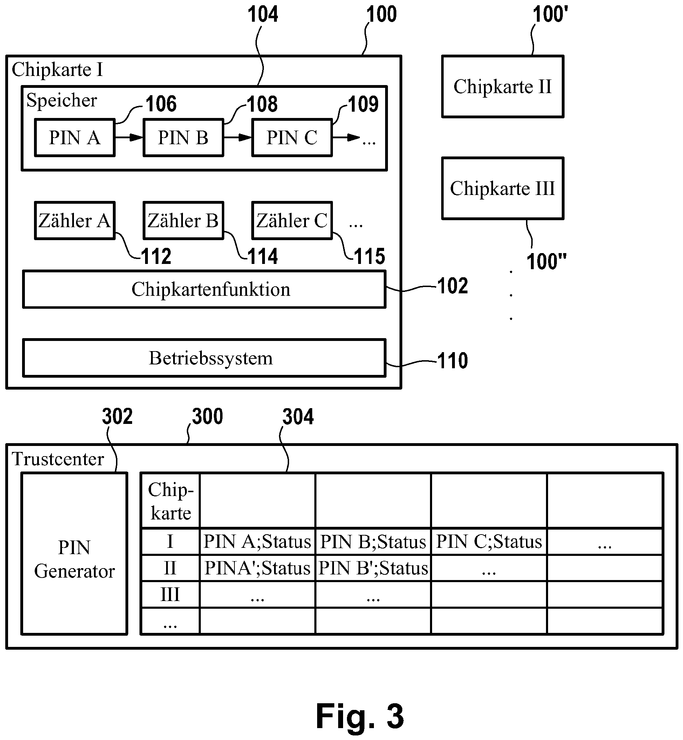

Die Figur 3 zeigt eine weitere Ausführungsform einer erfindungsgemäßen Chipkarte. Elemente der Figur 3, die Elementen der Figur 1 entsprechen, sind mit denselben Bezugszeichen gekennzeichnet.

Die Figur 3 zeigt exemplarisch Chipkarten 100, 100', 100",... nämlich die Chipkarten I, II, III, ... die verschiedenen Benutzern zugeordnet sind. Die Chipkarten sind prinzipiell gleich aufgebaut.

Der Speicher 104 beispielsweise der Chipkarte I beinhaltet eine Sequenz von PINs, wie zum Beispiel die PINs 106, 108, 109, ..., d.h. die Sequenz PIN A, PIN B, PIN C, ... Diesen Kennungen ist jeweils ein Fehlbedienungszähler 112, 114, 115, ... zugeordnet, d.h. der PIN A ist der Zähler A, der PIN B der Zähler B und der PIN C der Zähler C zugeordnet, etc. Im Lieferzustand der Chipkarte I stehen sämtliche der Fehlbedienungszähler 112, 114, 115, ... der Chipkarte I auf einem initialen Wert, wie zum Beispiel 0.

Die aktuell gültige PIN der in dem Speicher 104 gespeicherten Sequenz ist die führende PIN der Sequenz, die nicht gesperrt ist. Im Lieferzustand der Chipkarte I ist dies also die PIN A, da diese ja am Anfang der Sequenz steht und deren Fehlbedienungszähler 112 auf seinem initialen Wert steht, welcher um die Anzahl der erlaubten Fehlbedienungen unterhalb seines vorgegebenen Maximalwerts liegt.

Die Chipkarten 100 sowie weitere Chipkarten desselben Typs 100', 100" werden in einem Trust-Center 300 personalisiert. Zur Generierung und Verwaltung der PINs hat das Trust-Center 300 ein Computersystem mit einem PIN-Generator 302 und einer Datenbank 304.

Beispielsweise ist die Datenbank 304 so aufgebaut, dass für jede Chipkarte die in dem Speicher der betreffenden Chipkarte gespeicherte Sequenz von geheimen Kennungen, gegebenenfalls auch verschlüsselt, abgeleitet oder anderweitig nicht im Klartext in der Datenbank 304 gespeichert ist. Für die Chipkarte I sind dies die PIN A, PIN B, PIN C, ..., für die Chipkarte II ist dies eine andere Sequenz PIN A', PIN B', ..., etc.

Zu jeder PIN kann ein Status gespeichert werden. Beispielsweise können drei verschiedene Stati vorkommen:
- "00" für eine aktuelle PIN, die dem Benutzer beispielsweise mit Hilfe eines so genannten PIN-Briefs von dem Trust-Center 300 oder auf einem sicheren elektronischen Wege mitgeteilt worden ist;
- "01" für eine Ersatz-PIN, die dem Benutzer noch nicht mitgeteilt worden ist, die also noch unverbraucht ist;
- "11" für eine ungültige, gesperrte PIN.

Alternativ können PINs mit dem Status "00" oder "11" auch gelöscht werden, um nur die Ersatz-PINs 304 in der Reihenfolge der jeweiligen Sequenzen in der Datenbank 304 vorzuhalten. Bei der Personalisierung einer Chipkarte 100 ist der Status der ersten PIN der in dem Speicher 104 gespeicherten Sequenz dieser Chipkarte "00", da diese PIN mit der Auslieferung der Chipkarte an den Benutzer dem Benutzer mitgeteilt wird. Die Stati der weiteren PINs der in dieser Chipkarte 100 gespeicherten Kennungen ist dagegen "01", da diese Ersatz-PINs dem Benutzer zunächst nicht mitgeteilt werden.

Hat der Benutzer seine PIN A vergessen, so tätigt er mehrere vergebliche Eingabeversuche bis der Fehlbedienungszähler 112, der der PIN A zugeordnet ist, auf seinem Maximalwert steht, und die PIN A damit gesperrt ist.

Der Benutzer wendet sich dann an das Trust-Center 300, um eine Ersatz-PIN zu erhalten. Dies kann auf jedem Kommunikationsweg geschehen, beispielsweise durch eine telefonische Anforderung oder mittels einer elektronischen Nachricht. Das Trust-Center 300 überträgt daraufhin die führende PIN der Sequenz, die in der Chipkarte dieses Benutzers gespeichert ist, und die den Status "01" hat, auf einem sicheren Weg an den Benutzer, beispielsweise durch Versendung eines weiteren PIN-Briefs. In dem hier betrachteten Beispielsfall erhält also der Benutzer eine Mitteilung der PIN B, deren Status damit auf "00" gesetzt wird. Aufgrund der Anforderung einer weiteren PIN wird der Status der zuvor aktuellen PIN A auf "11", d.h. ungültig, verändert.

Wenn der Benutzer die Ersatz-PIN B in die Chipkarte 100 eingibt, so prüft das Betriebssystem 110 diese Ersatz-PIN gegen die in dem Speicher 104 gespeicherte Kennung 108, da dies die führende Kennung der gespeicherten PIN-Sequenz ist, die nicht gesperrt ist. Denn der Zählerstand des Fehlbedienungszählers 112, der sich auf seinem Maximalwert befindet, gibt ja an, dass die PIN A gesperrt ist, und da sich der Zählerstand des Fehlbedienungszählers 114 noch in seinem Lieferzustand befindet wird damit die auf die ungültige PIN A in der Sequenz folgende PIN B als die aktuell gültige PIN identifiziert.

Wenn der Benutzer auch die PIN B vergisst, so kann er von dem Trust-Center eine weitere Ersatz-PIN erhalten, nämlich die PIN C, hinsichtlich derer analog vorgegangen wird. Dieser Vorgang kann so lange wiederholt werden, bis sämtliche Ersatz-PINs der Sequenz verbraucht sind. Erst dann muss die Chipkarte 100 durch eine neue ersetzt werden.

Bevor der Benutzer eine ihm mitgeteilte PIN verwenden kann, kann es erforderlich sein, dass vor der erstmaligen Verwendung dieser PIN diese aktiviert wird. Diese Aktivierung wird beispielsweise ebenfalls von dem Trust-Center 300 auf einem sicheren Wege durchgeführt und von dem Betriebssystem 110 der Chipkarte 100 geprüft.

Beispielsweise erhält der Benutzer bei der Auslieferung der Chipkarte 100 lediglich einen Aktivierungscode einer Erstnutzerfunktion, d.h. beispielsweise eine Transport-PIN, für die PIN A. Der Benutzer muss dann zuerst den Aktivierungscode für die PIN A eingeben. Der Aktivierungscode für die PIN A wird von dem Betriebssystem 100 auf Korrektheit geprüft. Wenn der Aktivierungscode korrekt ist, wird die PIN A als die aktuelle PIN von dem Betriebssystem 100 verwendet, solange sich der Zählerstand des der PIN A zugeordneten Fehlbedienungszählers 112 nicht auf seinem Maximalwert befindet. Insbesondere für Hochsicherheitsanwendungen wird dem Benutzer nur die Transport-PIN mitgeteilt, nicht aber die PIN A selbst, sondern der Benutzer muss nach Eingabe des korrekten Aktivierungscodes für die PIN A diese PIN A durch Eingabe in die Chipkarte selbst wählen.

Analog wird zur Aktivierung von Ersatz-PINs vorgegangen. Nachdem der Benutzer die PIN A vergessen hat und der Fehlbedienungszähler 112 auf seinem Maximalwert steht, muss er nach Mitteilung der Ersatz-PIN B bzw. deren Aktivierungscode oder TransportPIN diese Ersatz-PIN B zunächst aktivieren, indem er beispielsweise zunächst den entsprechenden Aktivierungscode eingibt, den er von dem Trust-Center 300 erhalten hat.

In einer alternativen Ausführungsform wird der Fehlbedienungszähler der aktuellen PIN dekrementiert bis er ausgehend von einem Initialwert einen Minimalwert erreicht hat, bei dem die betreffende PIN gesperrt ist.

In einer alternativen Ausführungsform werden die Sequenzen der Kennungen nicht in der Datenbank 304 gespeichert, sondern lediglich so genannte "Seed Values", die für die Generierung dieser Sequenzen mit Hilfe des PIN-Generators erforderlich sind. Bei Anforderung einer Ersatz-PIN durch einen Benutzer wird diese mit Hilfe des Seed Values neu generiert.

### Bezugszeichenliste

- 100: Chipkarte
- 102: Chipkarten-Funktion
- 104: Speicher
- 106: geheime Kennung
- 108: geheime Kennung
- 109: geheime Kennung
- 111: Betriebssystem
- 112: Fehlbedienungszähler
- 114: Fehlbedienungszähler
- 115: Fehlbedienungszähler
- 300: Trust-Center
- 302: PIN-Generator
- 304: Datenbank

## Patentansprüche

1. Verfahren zur Freischaltung einer Chipkarten-Funktion (102) einer Chipkarte (100, 100', 100",...), wobei die Chipkarte einen geschützten Speicherbereich (104) aufweist, in dem eine Sequenz von Kennungen (106, 108, 109,...) zur Freischaltung derselben Chipkarten-Funktion (102) gespeichert sind, welche bei einer Personalisierung der Chipkarte generiert und in dem geschützten Speicherbereich (104) gespeichert wurden, wobei die Sequenz zumindest eine erste und eine zweite Kennung (106, 108, 109,...) zur Freischaltung derselben Chipkarten-Funktion (102) umfasst, mit ersten Mitteln (110, 112) zur Sperrung der ersten Kennung, wenn eine maximale Anzahl von Fehleingaben hinsichtlich der ersten Kennung erreicht ist, mit zweiten Mitteln (110, 114) zur Sperrung der zweiten Kennung, wenn eine maximale Anzahl von Fehleingaben hinsichtlich der zweiten Kennung erreicht ist, und mit Mitteln (110) zur Freischaltung der Chipkarten-Funktion nach Eingabe der ersten Kennung, wenn die erste Kennung nicht gesperrt ist, und nach Eingabe der zweiten Kennung, wenn die erste Kennung gesperrt und die zweite Kennung nicht gesperrt ist, mit folgenden Schritten:
- Eingabe einer Kennung,
- Prüfung der Kennung auf Übereinstimmung mit der ersten Kennung (106) der Chipkarte, wenn hinsichtlich der ersten Kennung eine maximale Anzahl von Fehleingaben nicht überschritten ist, und andernfalls, Prüfung der Kennung auf Übereinstimmung mit der zweiten Kennung (108) der Chipkarte, wenn hinsichtlich der ersten Kennung die maximale Anzahl von Fehleingaben erreicht ist und hinsichtlich der zweiten Kennung eine maximale Anzahl von Fehleingaben nicht erreicht ist,
- Freischaltung der Chipkarten-Funktion, wenn die Prüfung der Kennung eine Übereinstimmung mit der ersten Kennung bzw. mit der zweiten Kennung ergeben hat,
wobei die Sequenz eine oder mehrere weitere in dem geschützten Speicherbereich gespeicherte Kennungen umfasst, wobei jeder der Kennungen der Sequenz jeweils Mittel (112, 114, 115,...) zur Sperrung zugeordnet sind, und wobei die Mittel (110) zur Freischaltung so ausgebildet sind, dass die Eingabe einer nicht gesperrten Kennung der Sequenz zur Freischaltung der Chipkarten-Funktion führt,
wobei die Mittel zur Freischaltung so ausgebildet sind, dass die Eingabe der führenden, nicht gesperrten Kennung der Sequenz für die Freischaltung der Chipkarte erforderlich ist.

2. Verfahren nach Anspruch 1, wobei es sich bei den Kennungen um PINs handelt.

3. Verfahren nach einem der vorhergehenden Ansprüche, wobei die Mittel zur Sperrung jeweils einen Fehleingabezähler beinhalten.

4. Verfahren nach einem der vorhergehenden Ansprüche, wobei die maximale Anzahl von Fehleingaben für jede der Kennungen identisch ist.

5. Verfahren nach einem der vorhergehenden Ansprüche, wobei jeder der Kennungen ein Aktivierungscode zugeordnet ist.

6. Chipkarte mit einem geschützten Speicherbereich (104), in dem eine Sequenz von Kennungen (106, 108, 109,...) zur Freischaltung derselben Chipkarten-Funktion (102) gespeichert sind, welche bei einer Personalisierung der Chipkarte generiert und in dem geschützten Speicherbereich (104) gespeichert wurden, wobei die Sequenz zumindest eine erste und eine zweite Kennung (106, 108, 109,...) zur Freischaltung derselben Chipkarten-Funktion (102) umfasst, mit ersten Mitteln (110, 112) zur Sperrung der ersten Kennung, wenn eine maximale Anzahl von Fehleingaben hinsichtlich der ersten Kennung erreicht ist, mit zweiten Mitteln (110, 114) zur Sperrung der zweiten Kennung, wenn eine maximale Anzahl von Fehleingaben hinsichtlich der zweiten Kennung erreicht ist, und mit Mitteln (110) zur Freischaltung der Chipkarten-Funktion nach Eingabe der ersten Kennung, wenn die erste Kennung nicht gesperrt ist, und nach Eingabe der zweiten Kennung, wenn die erste Kennung gesperrt und die zweite Kennung nicht gesperrt ist,
wobei die Sequenz eine oder mehrere weitere in dem geschützten Speicherbereich gespeicherte Kennungen umfasst, wobei jeder der Kennungen der Sequenz jeweils Mittel (112, 114, 115,...) zur Sperrung zugeordnet sind, und wobei die Mittel (110) zur Freischaltung so ausgebildet sind, dass die Eingabe einer nicht gesperrten Kennung der Sequenz zur Freischaltung der Chipkarten-Funktion führt, wobei die Mittel zur Freischaltung so ausgebildet sind, dass die Eingabe der führenden, nicht gesperrten Kennung der Sequenz für die Freischaltung der Chipkarte erforderlich ist.

7. Chipkarte nach Anspruch 6, wobei die Mittel zur Freischaltung so ausgebildet sind, dass vor der erstmaligen Freischaltung der Chipkarten-Funktion mit Hilfe einer der Kennungen der der einen der Kennungen zugeordnete Aktivierungscode eingegeben werden muss.

8. Computersystem für die Generierung von Kennungen für Chipkarten (100, 100', 100",...) nach einem der vorhergehenden Ansprüche,
wobei die Kennungen jeweils eine Sequenz bilden, welche bei einer Personalisierung einer der Chipkarte generiert und in einem geschützten Speicherbereich der entsprechenden Chipkarte gespeichert wird, und ferner mit Mitteln zur Ausgabe einer als unverbraucht gekennzeichneten Kennung der Sequenz aufgrund einer Nutzeranforderung,
wobei die Ausgabe der Kennungen in der durch die Sequenz vorgegebenen Reihenfolge erfolgt.

9. Computerprogrammprodukt mit von einem Prozessor einer Chipkarte ausführbaren Programminstruktionen zur Ausführung eines Verfahrens nach einem der Ansprüche 1 bis 5.

## Claims

1. A method for releasing a chip card function (102) of a chip card (100, 100', 100",...), wherein the chip card has a protected memory region (104), in which a sequence of identifiers (106, 108, 109,...) for releasing the same chip card function (102) are stored, which were generated at a time of personalisation of the chip card and were stored in the protected memory region (104), wherein the sequence comprises at least a first and a second identifier (106, 108, 109,...) for releasing the same chip card function (102), with first means (110, 112) for blocking the first identifier if a maximum number of defective inputs relating to the first identifier is reached, with second means (110, 114) for blocking the second identifier if a maximum number of defective inputs relating to the second identifier is reached, and with means (110) for releasing the chip card function following input of the first identifier if the first identifier is not blocked and following input of the second identifier if the first identifier is blocked and the second identifier is not blocked, said method comprising the following steps:
- inputting an identifier,
- checking whether the identifier matches the first identifier (106) of the chip card if a maximum number of defective inputs relating to the first identifier has not been exceeded, and otherwise checking whether the identifier matches the second identifier (108) of the chip card if the maximum number of defective inputs relating to the first identifier has been reached and a maximum number of defective inputs relating to the second identifier has not been reached,
- releasing the chip card function if the checking of the identifier has revealed a match with the first identifier or with the second identifier,
wherein the sequence comprises one or more further identifiers stored in the protected memory region, wherein each of the identifiers of the sequence is assigned blocking means (112, 114, 115,...), and wherein the release means (110) are designed such that the input of a non-blocked identifier of the sequence leads to the release of the chip card function, wherein the release means are designed such that the input of the leading, non-blocked identifier of the sequence is necessary for the release of the chip card.

2. The method according to claim 1, wherein the identifiers are PINs.

3. The method according to either one of the preceding claims, wherein the blocking means include a defective input counter.

4. The method according to any one of the preceding claims, wherein the maximum number of defective inputs for each of the identifiers is identical.

5. The method according to any one of the preceding claims, wherein each of the identifiers is assigned an activation code.

6. A chip card with a protected memory region (104), in which a sequence of identifiers (106, 108, 109,...) for releasing the same chip card function (102) are stored, which were generated at the time of a time of personalisation of the chip card and were stored in the protected memory region (104), wherein the sequence comprises at least a first and a second identifier (106, 108, 109,...) for releasing the same chip card function (102), with first means (110, 112) for blocking the first identifier if a maximum number of defective inputs relating to the first identifier is reached, with second means (110, 114) for blocking the second identifier if a maximum number of defective inputs relating to the second identifier is reached, and with means (110) for releasing the chip card function following input of the first identifier if the first identifier is not blocked and following input of the second identifier if the first identifier is blocked and the second identifier is not blocked,
wherein the sequence comprises one or more further identifiers stored in the protected memory region, wherein each of the identifiers of the sequence is assigned blocking means (112, 114, 115,...), and wherein the release means (110) are designed such that the input of a non-blocked identifier of the sequence leads to the release of the chip card function, wherein the release means are designed such that the input of the leading, non-blocked identifier of the sequence is necessary for the release of the chip card.

7. The chip card according to claim 6, wherein the release means are designed such that, prior to the first-time release of the chip card function with the aid of one of the identifiers, the activation code assigned to said one of the identifiers must be input.

8. A computer system for generating identifiers for chip cards (100, 100', 100",...) according to any one of the preceding claims,
wherein the identifiers form a sequence which is generated at a time of personalisation of the chip card and is stored in a protected memory region of the corresponding chip card, and also with means for outputting an identifier, characterised as unused, of the sequence on the basis of a user request,
wherein the identifiers are output in the order specified by the sequence.

9. A computer program product with program instructions executable by a processor of a chip card for carrying out a method according to any one of claims 1 to 5.

## Revendications

1. Procédé de libération d'une fonction de carte à puce (102) d'une carte à puce (100, 100', 100", ...), où la carte à puce présente une zone de mémoire (104) sécurisée dans laquelle est stockée une séquence d'identifications (106, 108, 109, ...) pour la libération de cette même fonction de carte à puce (102), lesquelles identifications ont été générées lors d'une personnalisation de la carte à puce et ont été stockées dans la zone de mémoire (104) sécurisée, où la séquence comprend au moins une première et une deuxième identification (106, 108, 109, ...) pour cette même fonction de carte à puce (102), avec des premiers moyens (110, 112) pour le blocage de la première identification lorsqu'un nombre maximal d'indications d'erreurs concernant la première identification est atteint, avec des seconds moyens (110, 114) pour le blocage de la deuxième identification lorsqu'un nombre maximal d'indications d'erreurs concernant la deuxième identification est atteint, et avec des moyens (110) pour la libération de la fonction de carte à puce après la saisie de la première identification lorsque la première identification n'est pas bloquée, et après la saisie de la deuxième identification lorsque la première identification est bloquée et que la deuxième identification n'est pas bloquée, avec les étapes suivantes :
- de saisie d'une identification,
- de vérification de l'identification concernant la concordance avec la première identification (106) de la carte à puce, si un nombre maximal d'indications d'erreurs n'est pas dépassé en ce qui concerne la première identification, et dans le cas contraire, de vérification de l'identification concernant une concordance avec une deuxième identification (108) de la carte à puce si le nombre maximal d'indications d'erreurs est atteint pour la première identification et qu'un nombre maximal d'indications d'erreurs n'est pas atteint pour la deuxième identification,
- de libération de la fonction de carte à puce lorsque la vérification de l'identification a eu pour résultat une concordance avec la première identification, respectivement, avec la deuxième identification,
où la séquence comprend une ou plusieurs autres identifications stockées dans la zone de mémoire sécurisée, où respectivement des moyens (112, 114, 115, ...) pour le blocage sont associés à chacune des identifications de la séquence, et où les moyens (110) sont prévus pour la libération, de sorte que la saisie d'une identification non bloquée de la séquence mène à la libération de la fonction de carte à puce,
où les moyens de libération sont conçus de manière à ce que la saisie de l'identification principale non bloquée de la séquence est nécessaire pour la libération de la carte à puce.

2. Procédé selon la revendication 1, dans lequel il s'agit de codes PIN dans le cas des identifications.

3. Procédé selon l'une des revendications précédentes, dans lequel les moyens de blocage contiennent respectivement un compteur d'indications d'erreurs.

4. Procédé selon l'une des revendications précédentes, dans lequel le nombre maximal d'indications d'erreurs est identique pour chacune des identifications.

5. Procédé selon l'une des revendications précédentes, dans lequel un code d'activation est associé à chacune des identifications.

6. Carte à puce avec une zone de mémoire (104) sécurisée, dans laquelle est stockée une séquence d'identifications (106, 108, 109, ...) pour la libération de cette même fonction de carte à puce (102), lesquelles identifications ont été générées lors d'une personnalisation de la carte à puce et ont été stockées dans la zone de mémoire (104) sécurisée, où la séquence comprend au moins une première et une deuxième identification (106, 108, 109, ...) pour la libération de cette même fonction de carte à puce (102), avec des premiers moyens (110, 112) pour le blocage de la première identification lorsqu'un nombre maximal d'indications d'erreurs concernant la première identification est atteint, avec des seconds moyens (110, 114) pour le blocage de la deuxième identification lorsqu'un nombre maximal d'indications d'erreurs concernant la deuxième identification est atteint, et avec des moyens (110) pour la libération de la fonction de carte à puce après la saisie de la première identification lorsque la première identification n'est pas bloquée, et après la saisie de la deuxième identification lorsque la première identification est bloquée et que la deuxième identification n'est pas bloquée,
où la séquence comprend une ou plusieurs autres identifications stockées dans la zone de mémoire sécurisée, où respectivement des moyens (112, 114, 115, ...) pour le blocage sont associés à chacune des identifications de la séquence, et où les moyens (110) sont prévus pour la libération, de sorte que la saisie d'une identification non bloquée de la séquence mène à la libération de la fonction de carte à puce, où les moyens de libération sont conçus de manière à ce que la saisie de l'identification principale non bloquée de la séquence est nécessaire pour la libération de la carte à puce.

7. Carte à puce selon la revendication 6, dans laquelle les moyens pour la libération sont conçus de manière à ce qu'avant la première libération de la fonction de carte à puce à l'aide de l'une des identifications, le code d'activation associé à l'identification en question doit être indiqué.

8. Système informatique pour la génération d'identifications pour des cartes à puce (100, 100', 100", ...) selon l'une des revendications précédentes,
dans lequel les identifications forment une séquence, laquelle est générée lors d'une personnalisation d'une des cartes à puce et est stockée dans une zone de mémoire sécurisée de la carte à puce correspondante, et doté en outre de moyens pour l'édition d'une identification de la séquence **caractérisée** comme étant non utilisée en raison d'une demande d'utilisateur,
où l'édition des identifications a lieu dans la suite prédéfinie par la séquence.

9. Produit-programme informatique avec des instructions de programme exécutables par un processeur d'une carte à puce pour l'exécution d'un procédé selon l'une des revendications 1 à 5.
